# EUROPÄISCHE PATENTANMELDUNG

(11) **EP 4 675 134 A1**
(43) Veröffentlichungstag der Anmeldung: **07.01.2026**
(21) Anmeldenummer: 25172854.9
(22) Anmeldetag: 28.04.2025
(51) Int. Cl.: F16K 7/12

(54) **RELAXATIONSKOMPENSATOR EINES MEMBRANVENTILS**

(30) Priorität: 01.07.2024 DE 102024118563
(71) Anmelder: SISTO Armaturen S.A., 6468 Echternach (LU)
(72) Erfinder: HACKENBERGER, Bernd, 6468 Echternach (LU); HESS, Timo, 6468 Echternach (LU); SICHWARDT, Paul, 6468 Echternach (LU); BRÜCK, Pascal, 6468 Echternach (LU)
(74) Vertreter: Busch, Tobias

(57) **Zusammenfassung**

Membranventil mit einer Membran (5), die Räume voneinander dichtend trennt, wobei die Membran (5) zwischen einem Oberteil (7) und einem Unterteil (1) angeordnet ist. Das Membranventil weist eine Einspannanordnung (14) auf, bei der die Membran (5) unmittelbar zwischen dem Oberteil (7) und dem Unterteil (1) gehalten wird. Das Membranventil weist eine Dichtungsanordnung auf, bei der das Oberteil (7) unmittelbar auf eine Federvorrichtung (15) einwirkt, wobei die Federvorrichtung (15) die Membran (5) unmittelbar gegen das Unterteil (1) mit einer Pressung von mehr als 3 N/mm² drückt.

## Beschreibung

Die Erfindung betrifft ein Membranventil mit einer Membran, die Räume voneinander dichtend trennt, wobei die Membran zwischen einem Oberteil und einem Unterteil angeordnet ist, wobei das Membranventil eine Einspannanordnung aufweist, bei der die Membran unmittelbar zwischen dem Oberteil und dem Unterteil gehalten wird.

Membranventile finden Anwendung in der präzisen Dosierung verschiedener Fluide, darunter Gase, Dämpfe und Flüssigkeiten. Insbesondere eignen sie sich zur Dosierung und Verteilung von hochviskosen oder stark haftfähigen Medien, wobei sie effektiv Ablagerungen verhindern und somit eine Kontamination ausschließen. Aufgrund ihres geringen Totraumvolumens und einer entleerungsoptimierten Konstruktion sind Membranventile prädestinierte Armaturen im Bereich der sterilen Prozesstechnik.

In pharmazeutischen Anlagen und Fertigungsprozessen sind diese Eigenschaften von entscheidender Bedeutung, da strenge Validierungsanforderungen erfüllt werden müssen, um eine gleichbleibende und reproduzierbare Qualität sicherzustellen. Die Möglichkeit, verschiedene Prozesse neben der Produktion wie Reinigung, Desinfektion und Sterilisation innerhalb der Anlage durchzuführen, ist ein zentraler Aspekt. Aufgrund ihrer vorteilhaften Konstruktionsmerkmale haben sich Membranventile als bevorzugte Armatur in der sterilen Prozesstechnik etabliert.

Die eingesetzten Membranen fungieren als bewegliche, dichtende Barrieren, die zwei Räume mit unterschiedlichen Medien und Druckverhältnissen voneinander trennen. Ein entscheidendes Qualitätsmerkmal für Membranen ist ihre Beweglichkeit, also die Fähigkeit, senkrecht zur Einspannfläche einen Hub auszuführen, der mechanisch angetrieben sein kann. Zudem spielt die Beständigkeit der Membran eine wichtige Rolle, insbesondere, wenn aggressive Medien transportiert werden.

Die Bewegungsfähigkeit und Beständigkeit der Membran hängen im Wesentlichen vom Werkstoff ab. Als Grundwerkstoffe für Membranen werden vorwiegend Elastomere verwendet, die durch Gewebeeinlagen für eine höhere Festigkeit verstärkt werden können. Ein bewährtes Elastomer für Membranen ist Ethylen-Propylen-Dien-Kautschuk (EPDM), ein terpolymersynthetischer Kautschuk, der sich durch hohe Elastizität und gute chemische Beständigkeit auszeichnet.

Die EP 3 324 084 B1 offenbart ein Membranventil mit einer Membran, die Räume voneinander dichtend trennt, wobei die Membran zwischen Gehäuseteilen angeordnet ist, wobei die Membran einen inneren Bereich aufweist, an den sich ein äußerer Bereich anschließt, der eine höhere Härte aufweist, wobei der innere Bereich aus einem elastomeren Werkstoff besteht, wobei der äußere Bereich aus einem thermoplastischen und/oder duroplastischen Werkstoff besteht, wobei die Membran ein Federelement aufweist.

Die EP 4 067 709 A1 offenbart ein Membranventil mit einer Antriebsbaugruppe mit mindestens einem Verbindungsabschnitt für eine rotatorische Montage der Antriebsbaugruppe und einer Zwischenbaugruppe; die Zwischenbaugruppe mit einem Gehäuse und mit einem zumindest teilweise innerhalb des Gehäuses angeordneten Spannstück, wobei das Gehäuse mindestens einen Verbindungsabschnitt für die rotatorische Montage der Antriebsbaugruppe und der Zwischenbaugruppe umfasst, wobei das Gehäuse mindestens einen in einem Innenraum angeordneten Verbindungsabschnitt für eine rotatorische Montage der Zwischenbaugruppe und des Ventilkörpers umfasst; eine Membran, welche zwischen dem Spannstück und dem Ventilkörper angeordnet ist; und den Ventilkörper mit mindestens einem Verbindungsabschnitt für die rotatorische Montage der Zwischenbaugruppe und des Ventilkörpers verspannt.

Der Bereich, in dem eine Membran in einem Membranventil eingespannt wird, unterliegt speziellen Anforderungen. Primär dient er dazu, die Membran zu halten. Sofern keine zusätzliche Abdichtung zwischen dem Unterteil und dem Oberteil des Gehäuses vorgesehen ist, kann der eingespannte Rand zwischen den Gehäuseteilen auch die Funktion einer ruhenden Abdichtung übernehmen.

Die Membran unterliegt mit zunehmender Verwendungsdauer einem Relaxationsprozess, bei dem die polymeren Bestandteile langsam fließen können, wodurch die Spannung, insbesondere am Rand bzw. an der Einspannung der Membran, nachlässt. Dieser Vorgang wird auch als "Setzen" bezeichnet. Dies führt dazu, dass die Abdichtung zwischen Unter- und Oberteil sowie der Membran nicht ganz zuverlässig gewährleistet werden kann.

Aufgabe der Erfindung ist es, ein Membranventil mit einer Membran bereitzustellen, deren Abdichtung zuverlässig gewährleistet werden kann. Dabei sollte das Membranventil eine dauerhafte Abdichtung zwischen den Gehäuseteilen und der Membran gewährleisten können. Gleichzeitig sollten die Maßnahmen der Abdichtung nicht zu einer vorzeitigen Schädigung der Membran führen. Das Membranventil soll sich durch eine preiswerte Herstellungsweise und eine hohe Lebensdauer auszeichnen. Zudem soll das Membranventil möglichst wartungsfrei sein.

Diese Aufgabe wird erfindungsgemäß durch ein Membranventil mit einer Membran gemäß den Merkmalen des Anspruchs 1 gelöst. Bevorzugte Varianten sind den Unteransprüchen, der Beschreibung und den Figuren zu entnehmen.

Gemäß der Erfindung weist das Membranventil eine Dichtungsanordnung auf, bei der das Oberteil unmittelbar auf eine Federvorrichtung einwirkt, wobei die Federvorrichtung die Membran unmittelbar gegen das Unterteil mit einer Pressung von mehr als 3 N/mm² drückt.

Das Oberteil ist vorzugsweise als Gehäuseoberteil des Membranventils ausgeführt. Bei einer alternativen Variante der Erfindung kann das Oberteil auch als Zwischenbauteil des Membranventils ausgeführt sein.

Bei einer Variante der Erfindung kann das Oberteil beispielsweise die Haube des Membranventils sein.

Das Unterteil ist beispielsweise als Gehäuseunterteil des Membranventils ausgeführt.

Die Einspannanordnung umfasst beispielsweise einen Membransitz des Unterteils, eine Auflagefläche des Oberteils, die Membran und die Befestigungsmittel, mit denen die Membran zwischen Oberteil und Unterteil verspannt wird.

Bei einer weiteren Variante der Erfindung kann die Einspannanordnung die Haube inklusive Haubenwulst umfassen.

Die Dichtungsanordnung umfasst beispielsweise das Oberteil, das Unterteil sowie die Federvorrichtung und die Membran selbst.

Die Federvorrichtung umfasst beispielsweise mindestens ein Federelement und mindestens ein Konturelement.

Beispielsweise drückt die Federvorrichtung die Membran unmittelbar gegen das Unterteil mit einer Pressung von mehr als 0,1 N/mm² und von weniger als 150 N/mm², vorzugsweise von mehr als 1 N/mm² und von weniger als 100 N/mm², insbesondere von mehr als 3 N/mm² und von weniger als 50 N/mm². Dadurch kann die Dichtungsanordnung eine zuverlässige Abdichtung zwischen Oberteil, Unterteil und Membran gewährleisten, ohne Schädigung der Membran aufgrund unzulässiger Anpressung.

Beispielsweise weist die Federvorrichtung mindestens ein Federelement mit einer Steifigkeit von mehr als 1000 N/mm und weniger als 100000 N/mm auf. Hierdurch kann die Federvorrichtung dichtend ausgeführt werden und gleichzeitig die Membran nur so stark belasten, dass keine unerwünschte Verformung bzw. Beschädigung auftreten kann.

Die Federkraft ist die Kraft, die eine Feder ausübt, wenn sie verformt wird. Die Federkraft ist proportional zur Verformung. Dabei ist die Federkonstante ein Maß für die Steifigkeit einer Feder. Die Federkonstante gibt an, wie stark sich eine Feder bei einer bestimmten Krafteinwirkung verformt.

Die Steifigkeit gibt den Zusammenhang zwischen Kraft und Verformung eines elastischen Körpers, wie beispielsweise eines Federelements, an. Je höher die Steifigkeit, desto geringer ist die Verformung bei gleicher Krafteinwirkung.

Die Federsteifigkeit beschreibt, wie steif eine Feder ist, also wie widerstandsfähig sie gegen Verformungen ist. Sie gibt an, wie viel Kraft erforderlich ist, um eine bestimmte Dehnung bzw. Kompression in der Federlänge zu erzeugen.

Die Federvorrichtung weist mindestens ein Konturelement zur Generierung einer linienförmigen Abdichtung auf.

Das Konturelement ist das Element der Federvorrichtung, das durch seine Form einen möglichst schonenden Kontakt zur Membran generiert und dabei eine Dichtfunktion zusammen mit der Membran und dem Unterteil erzielt.

Das Konturelement zeichnet sich besonders durch eine abgerundete Gestalt und Form aus, insbesondere im direkten und unmittelbaren Kontakt zur Membran.

Beispielsweise umfasst das Konturelement eine ringförmige Erhebung in Form eines Vorsprungs, die einen Halbkreisquerschnitt aufweist.

Bei einer Variante der Erfindung weist die Erhebung eine Linienform auf, mit der die abdichtende Wirkung in der Wechselwirkung mit der Membran realisiert wird.

Die Erhebung bzw. die Rundung des Konturelements können beispielsweise an der Außenseite, in der Mitte und/oder in der Innenseite des Konturelements angeordnet sein.

Das Konturelement verhindert wirksam eine unerwünschte Beeinträchtigung des Membranzustandes, indem eine Zerstörung der Membran durch zu starkes und punktuelles Anpressen in Form von Einschneiden verhindert wird. Gleichzeitig muss die Membran keine Dichtlippe aufweisen, da das Konturelement eine zuverlässige Abdichtung der Membran zwischen Oberteil, Unterteil und der Membran realisieren kann.

Beispielsweise umfasst das Konturelement einen ringförmigen Vorsprung, wobei die Breite des Vorsprungs mehr als 10 % und weniger als 50 % der Breite der Federvorrichtung beträgt.

Bei einer Variante der Erfindung weist der ringförmige Vorsprung des Konturelements keine spitzen Ecken auf.

Der ringförmige Vorsprung des Konturelements weist beispielsweise ausschließlich runde Übergänge auf.

Das Konturelement ist beispielsweise als ringförmiges Bauteil aus einem Kunststoff oder einem metallischen Werkstoff ausgebildet. Dadurch kann eine hervorragende Dichtwirkung ohne Schädigung der Membran erzielt werden.

Bei einer Variante der Erfindung weist das Oberteil einen Wulst auf, der einen Raum begrenzt, in dem die Federvorrichtung angeordnet ist.

Beispielsweise positioniert der Haubenwulst die Federvorrichtung.

Bei einer Variante weist die Federvorrichtung mindestens ein axiales Federelement auf, das vorzugsweise als Tellerfeder ausgebildet ist.

Die Federvorrichtung umfasst mindestens ein Bauteil in Form eines Federelements.

Darüber hinaus kann in Abhängigkeit der Membranventilausführung die Federvorrichtung auch mehrere Federelemente umfassen.

Bei einer Ausführungsvariante kann das Federelement einstückig mit dem Konturelement ausgebildet sein.

Eine Tellerfeder ist eine spezielle Art von Feder, die sich durch ihre flache, ringförmige Form auszeichnet, ähnlich einem flachen Teller oder einer Scheibe. Die Tellerfeder wird auch als Tellerscheibenfeder oder Rondellenfeder bezeichnet.

Die Funktion der Tellerfeder besteht darin, Lasten oder Kräfte in axialer Richtung aufzunehmen und zu verteilen. Die Feder kann komprimiert werden, wenn Druck ausgeübt wird, und sie kehrt in ihre ursprüngliche Form zurück, wenn die Last entfernt wird.

Ein Federelement ist ein Bauteil, das dazu dient, eine Kraft bzw. einen Anpressdruck auf eine definierte Fläche aufzubringen. Es besteht typischerweise aus einer Feder, die einer definierten Vorspannung unterliegt, um die genannte Funktion zu erfüllen.

Eine Tellerfeder ist eine kegelige Ringschale, die in Achsrichtung belastbar ist und sowohl ruhend als auch schwingend beansprucht werden kann.

Tellerfedern und Schraubenfedern gehören beide zur Kategorie der Axialfedern. Axialfedern sind Federn, die in axialer Richtung, also in Richtung ihrer Längsachse, belastet werden und bei denen ihre Verformung ebenfalls in axialer Richtung erfolgt.

Der gemeinsame Nenner von Tellerfedern und Schraubenfedern ist, dass sie beide eine Kraft in axialer Richtung ausüben und aufnehmen können. Tellerfedern sind kegelförmige Ringscheiben, die axial belastet werden, während Schraubenfedern eine Kraft entgegenwirkt, die auf die Verlängerung der Feder in axialer Richtung gerichtet ist.

Es gibt auch Varianten, bei denen mehrere Federelemente zum Einsatz kommen. Vorzugsweise handelt es sich bei den Federelementen der Federvorrichtung um ringförmig ausgebildete Elemente, die entlang des äußeren Dichtbereichs der Membran wirken. Die Federvorrichtung bewirkt ein Nachspannen zum dichtenden Anpressen der Membran.

Bei einer alternativen Variante kann das Federelement als ein Druckverteil-Federelement ausgebildet sein.

Beispielsweise ist mindestens ein Federelement kompakt und direkt an der Membran positioniert.

Das erfindungsgemäße Zusammenwirken der Dichtungsanordnung bewirkt eine automatische Nachstellung der Abdichtung zwischen dem Oberteil, dem Unterteil und der Membran und gewährleistet somit eine dauerhafte Abdichtung an dieser wichtigen Stelle im Membranventil.

Beispielsweise weist das Unterteil, insbesondere das Gehäuseunterteil des Membranventils, einen Vorsprung zur Einwirkung auf die Membran auf. Dabei ist der Vorsprung als Auflagefläche der Membran ausgebildet, so dass die Federvorrichtung entsprechend eine abdichtende Anpressfläche als Gegenspieler nutzen kann.

Der Vorsprung, der beispielsweise als Schulter bzw. Absatz ausgebildet sein kann, bietet eine Auflagefläche für die Membran, insbesondere den Teil der Membran, auf den die Federvorrichtung einwirkt. Insofern bilden der Teilbereich der Membran in Kontakt zum Vorsprung und der Vorsprung des Gehäuseunterteils korrespondierende Dichtflächen.

Bei einer Variante der Erfindung weist die Membran keine Dichtlippe auf. Die Dichtlippe ist Stand der Technik. Aufgrund der besonderen Konstruktion der Federvorrichtung kommt das erfindungsgemäße Membranventil vollständig ohne Dichtlippe aus. Dadurch ist die Membran einfacher zu fertigen und weist einen geringeren Raumbedarf innerhalb des Membranventils auf.

Bei einer Ausführung der Erfindung umfasst die Membran eine elastische Komponente aus einem Elastomer.

Die Membran besteht beispielsweise aus einem elastomeren Werkstoff. Vorzugsweise aus Ethylen-Propylen-Dien-Kautschuk (EPDM). Bei einer Variante der Erfindung kann die elastische Komponente eine Gewebeeinlage umfassen. Beispielsweise kann die elastische Komponente aus mindestens zwei Elastomerlagen bestehen, zwischen denen eine Gewebeeinlage angeordnet ist. Die Gewebeeinlage verstärkt die elastische Komponente der Membran.

Beispielsweise ist das Federelement der Federvorrichtung außerhalb der Membran angeordnet, also nicht in die Membran integriert. Insbesondere ist das Federelement kompakt und direkt an der Membran angebracht.

Die erfindungsgemäße Ausführung der Federvorrichtung führt zu einer höheren Betriebssicherheit durch eine selbstnachstellende Dichtung und verbessert die Funktion des Membranventils durch eine sichere und fehlerausschließende Montage. Darüber hinaus ist bei der erfindungsgemäßen Ausführung kein Nachziehen der Dichtung notwendig, wodurch auch Instandhaltungsfehler vermieden werden.

Weitere Merkmale und Vorteile der Erfindung ergeben sich aus der Beschreibung von Ausführungsbeispielen anhand von Zeichnungen und aus den Zeichnungen selbst.

Dabei zeigt:
Fig. 1 eine Schnittdarstellung eines Membranventils,
Fig. 2 einen Detailschnitt einer Federvorrichtung ohne Abstützung durch Haubenwulst mit einer Membran,
Fig. 3 einen weiteren Detailschnitt einer Federvorrichtung mit Abstützung durch Haubenwulst mit einer Membran,
Fig. 4 einen Detailschnitt einer weiteren Federvorrichtung mit Abstützung durch Haubenwulst mit einer Membran ohne äußere Dichtlippe,
Fig. 5 zwei Ausführungsvarianten der Federvorrichtung.

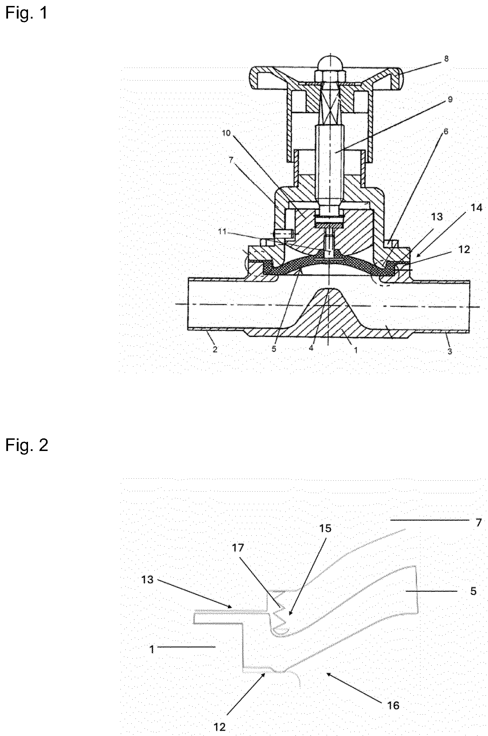

Fig. 1 zeigt ein Membranventil, das ein Unterteil 1 umfasst, welches Anschlüsse 2, 3 und ein Wehr 4 aufweist. Das Wehr 4 dient als Sitzfläche für die Membran 5. Die Membran 5 ist mithilfe von Verbindungsmitteln 6 eingespannt, die im Ausführungsbeispiel als Schrauben ausgeführt sind.

Die Membran 5 ist zwischen dem Unterteil 1 und einem Oberteil 7 eingespannt. Im Gehäuseoberteil 7, das als Haube ausgeführt ist, sind die zur Betätigung der Membran 5 notwendigen Elemente integriert, wie beispielsweise ein Antrieb 8, der im Ausführungsbeispiel als Handrad ausgeführt ist, sowie eine Spindel 9. An der Spindel 9 ist ein Druckstück 10 befestigt.

Das Druckstück 10 ist verschieblich im Oberteil 7 angeordnet und wird von einer inneren Wand des Oberteils 7 geführt. Durch Betätigung des Antriebs 8 wird über die Spindel 9 eine vertikale Verschiebung des Druckstücks 10 bewirkt, sodass sich die Membran 5 verformt und der Querschnitt zwischen dem Wehr 4 und der Membran 5 vergrößert bzw. verkleinert werden kann. In die Membran 5 ist ein stiftartiges Element 11 eingebettet, das im Ausführungsbeispiel als Membranschraube ausgebildet ist.

Der Sitz 12 des Unterteils 1, die Auflagefläche 13 des Oberteils 7, die Membran 5 sowie die Verbindungsmittel 6 bilden die Einspannanordnung 14. Die Einspannanordnung 14 hält die Membran 5 unmittelbar zwischen dem Oberteil 7 und dem Unterteil 1.

Fig. 2 zeigt einen Detailschnitt einer Federvorrichtung 15 mit einer Membran 5. Das Membranventil weist eine Dichtungsanordnung 16 auf, bei der das Oberteil 7 unmittelbar auf eine Federvorrichtung 15 einwirkt, wobei die Federvorrichtung 15 die Membran 5 unmittelbar gegen das Unterteil 1 mit einer Pressung von min. 3 N/mm² drückt. Dadurch kann die Dichtungsanordnung 16 eine zuverlässige Abdichtung zwischen dem Oberteil 7, dem Unterteil 1 und der Membran 5 gewährleisten ohne eine Schädigung der Membran 5 aufgrund unzulässiger Anpressung.

Die Federvorrichtung 15 umfasst ein Federelement 17 mit einer Steifigkeit von 1100 N/mm in der dargestellten Ausführungsvariante.

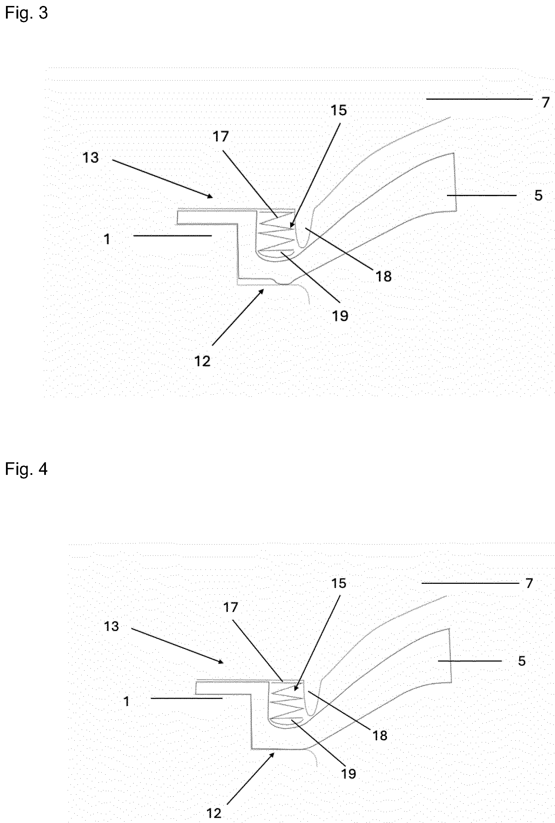

In Fig. 3 ist ein weiterer Detailschnitt einer Federvorrichtung 15 mit einer Membran 5 dargestellt. Die Ausführung in Fig. 3 unterscheidet sich von der Fig. 2 lediglich dadurch, dass das Oberteil 7 einen Wulst 18 aufweist, der einen Raum begrenzt, in dem die Federvorrichtung 15 angeordnet ist.

Die Federvorrichtung 15 weist ein Konturelement 19 zur Generierung einer linienförmigen Abdichtung auf. Das Konturelement 19 ist als ringförmiges Bauteil aus einem metallischen Werkstoff ausgebildet und weist den Querschnitt eines gestauchten Halbkreises auf.

Fig. 4 zeigt einen Detailschnitt einer weiteren Federvorrichtung 15 mit einer Membran 5, die im Wesentlichen der Ausführung in Fig. 2 und Fig. 3 entspricht. In Fig. 4 ist eine Ausführungsvariante dargestellt, bei der die Membran 5 keine umlaufende Dichtlippe aufweist.

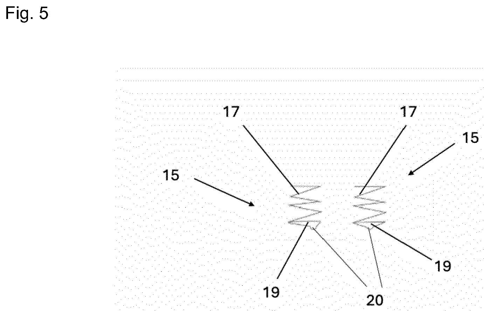

In Fig. 5 sind zwei Ausführungsvarianten der Federvorrichtung 15 dargestellt. Die Federvorrichtung 15 weist jeweils ein Konturelement 19 und ein Federelement 17 auf, die in der dargestellten Ausführungsvariante als Tellerfedern ausgebildet sind.

Das Konturelement 19 umfasst einen ringförmigen Vorsprung 20, wobei die Breite des Vorsprungs 20 15 % der Breite der Federvorrichtung 15 beträgt.

In der linken Darstellung ist der Vorsprung 20 des Konturelements 19 an der Innenseite des Konturelements 19 angeordnet.

Bei der rechten Darstellung ist der Vorsprung 20 mittig am Konturelement 19 angeordnet.

## Patentansprüche

1. Membranventil mit einer Membran (5), die Räume voneinander dichtend trennt,
wobei die Membran (5) zwischen einem Oberteil (7) und einem Unterteil (1) angeordnet ist,
wobei das Membranventil eine Einspannanordnung (14) aufweist, bei der die Membran (5) unmittelbar zwischen dem Oberteil (7) und dem Unterteil (1) gehalten wird,
**dadurch gekennzeichnet,**
**dass** das Membranventil eine Dichtungsanordnung (16) aufweist, bei der das Oberteil (7) unmittelbar auf eine Federvorrichtung (15) einwirkt, wobei die Federvorrichtung (15) die Membran (5) unmittelbar gegen das Unterteil (1) mit einer Pressung von mehr als 3 N/mm² drückt.

2. Membranventil nach Anspruch 1, **dadurch gekennzeichnet, dass** die Federvorrichtung (15) mindestens ein Federelement (17) mit einer Steifigkeit von mehr als 1000 N/mm und weniger als 100000 N/mm aufweist.

3. Membranventil nach Anspruch 1 oder 2, **dadurch gekennzeichnet, dass** die Federvorrichtung (15) mindestens ein Konturelement (19) zur Generierung einer linienförmigen Abdichtung aufweist.

4. Membranventil nach Anspruch 3, **dadurch gekennzeichnet, dass** das Konturelement (19) einen ringförmigen Vorsprung (20) umfasst, wobei die Breite des Vorsprungs (20) mehr als 10 % und weniger als 50 % der Breite der Federvorrichtung (15) beträgt.

5. Membranventil nach Anspruch 3 oder 4, **dadurch gekennzeichnet, dass** das Konturelement (19) als ringförmiges Bauteil aus einem Kunststoff oder einem metallischen Werkstoff ausgebildet ist.

6. Membranventil nach einem der Ansprüche 1 bis 5, **dadurch gekennzeichnet, dass** das Oberteil (7) einen Wulst (18) aufweist, der einen Raum begrenzt, in dem die Federvorrichtung (15) angeordnet ist.

7. Membranventil nach einem der Ansprüche 1 bis 6, **dadurch gekennzeichnet, dass** die Federvorrichtung (15) mindestens ein axiales Federelement (17) aufweist, das vorzugsweise als Tellerfeder ausgebildet ist.

8. Membranventil nach einem der Ansprüche 1 bis 7, **dadurch gekennzeichnet, dass** die Membran (5) keine Dichtlippe aufweist.
